# EUROPÄISCHE PATENTANMELDUNG

(11) **EP 4 726 437 A1**
(43) Veröffentlichungstag der Anmeldung: **15.04.2026**
(21) Anmeldenummer: 25205760.9
(22) Anmeldetag: 30.09.2025
(51) Int. Cl.: G01S 17/00, E02D 17/13, E02F 3/20, E02F 3/46, E02F 9/26

(54) **VERFAHREN ZUR ERMITTLUNG EINER POSITION UND/ODER BEWEGUNG EINES SEILS**

(30) Priorität: 09.10.2024 DE 102024129102
(71) Anmelder: Liebherr-Werk Nenzing GmbH, 6710 Nenzing (AT)
(72) Erfinder: SCHLATTER, Nicola, 6710 Nenzing (AT); ROSENBERGER, Thomas, 6800 Feldkirch (AT)
(74) Vertreter: Lorenz Seidler Gossel Part. mbB

(57) **Zusammenfassung**

Die vorliegende Erfindung betrifft ein Verfahren zur Ermittlung einer Position und/oder Bewegung eines Seils, insbesondere einer Maschine, und/oder einer an dem Seil angeordneten Last mit den Schritten:
- Ermitteln von Messpunkten durch eine Sensoreinheit;
- Zuordnen der Messpunkte zu dem Seil und/oder zu der an dem Seil angeordneten Last;
- Ermitteln der Position und/oder Bewegung des Seils und/oder der an dem Seil befestigen Last.

## Beschreibung

Die vorliegende Erfindung betrifft ein Verfahren zur Ermittlung einer Position und/oder Bewegung eines Seils, insbesondere einer Maschine, und/oder einer an dem Seil angeordneten Last.

Bei Maschinen, insbesondere Kränen, mit seilgeführten Lasten bzw. seilgeführten Ausrüstungsgegenständen kann es durch Bewegungen der Arbeitsmaschine zum Pendeln der Last bzw. des Ausrüstungsgegenstands kommen. Außerdem können beim Anheben bzw. Absetzen von Lasten bzw. Ausrüstungsgegenständen Schrägzüge auftreten, wobei der Verlauf des Seils nicht lotrecht ist.

Schrägzüge führen dazu, dass die Belastung auf die Struktur der Arbeitsmaschine höher ist als die Belastung, welche unter Annahme eines lotrechten Seilverlaufs berechnet wurde und auf die die Struktur der Arbeitsmaschine ausgelegt wurde. Dadurch können Schäden an der Arbeitsmaschine entstehen. Schrägzüge beim Anheben von Lasten bzw. Ausrüstungsgegenständen können durch den Schrägzug zu ungewollten Pendelbewegungen der Last bzw. des Ausrüstungsgegenstands führen.

Es sind daher aus dem Stand der Technik verschiedene Systeme zur Erkennung eines Schrägzugs bekannt.

Bekannt sind Systeme, die auf einer Sensorik mit einem Neigungsgeber bzw. Beschleunigungsgeber, welche von einer Kranspitze hängt und durch welche das Seil verläuft, basieren. Im Falle eines Schrägzug also eines schrägen Verlaufs des Seils wird mittels der Sensorik und eines Algorithmus der Winkel des Seils relativ zur Vertikalachse ermittelt. Solche Systeme sind bspw. als Vertical-Line-Finder (VLF)-Systeme bekannt und werden bspw. bei Kränen für den Materialumschlag und Raupenkranen verwendet.

Für dynamische Bewegungen des Seils wird, insbesondere bei Kränen für den Materialumschlag, zusätzlich das LPO-System eingesetzt. Dieses System hat einen vergleichbaren mechanischen Aufbau wie das VLF-System. Anstelle der Beschleunigungsgeber werden Gyroskope verwendet, um die dynamischen Effekte auf die Sensormessgrößen besser berücksichtigen zu können und somit eine genauere Messung zu ermöglichen. Solche Systeme sind auch als Cycoptronic bekannt.

Die bekannten Systeme bzw. Verfahren erfordern allerdings bspw. eine aufwendige Sensorik.

Vor diesem Hintergrund liegt der vorliegenden Erfindung die Aufgabe zugrunde, ein oben genanntes Verfahren zu verbessern.

Diese Aufgabe wird durch das Verfahren mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass das Verfahren die Schritte aufweist:
- Ermitteln von Messpunkten durch eine Sensoreinheit;
- Zuordnen der Messpunkte zu dem Seil und/oder zu der an dem Seil angeordneten Last;
- Ermitteln der Position und/oder Bewegung des Seils und/oder der an dem Seil befestigen Last.

Das Verfahren ist vorzugsweise ein computerimplementiertes Verfahren.

Das Seil kann auch mehrere Seilabschnitt bzw. Seile umfassen. In anderen Worten kann die Position und/oder Bewegung von mehreren Seilen ermittelt werden.

Die Messpunkte werden vorzugsweise mittels 3D-Distanzmessung, beispielsweise mittels eines Lidars, ermittelt,

Vorzugsweise ist vorgesehen, dass die Sensoreinheit ein Lidar ist oder einen Lidar aufweist und/oder insbesondere an der Maschine angeordnet ist.

Vorzugsweise erfolgt, insbesondere das Zuordnen durch, eine Segmentierung der Messpunkte, bei der die Messpunkte in Kategorien aufgeteilt und dem Seil, der Last, insbesondere dem Ausrüstungsgegenstand und/oder anderen Objekten zugeordnet werden.

Die Messpunkte können auch als Koordinaten bezeichnet werden. Die Sensoreinheit kann auch als Messeinheit bezeichnet werden.

In anderen Worten kann die Sensoreinheit Koordinaten, insbesondere relativ zur Sensoreinheit, erfassen, wobei diese Koordinaten realen Punkten auf Objekten in dem Erfassungsbereich der Sensoreinheit entsprechen.

Die Segmentierung bzw. Aufteilung oder Kategorisierung der Messpunkte erfolgt vorzugsweise durch eine Grobsegmentierung der Messpunkte, wobei Messpunkte, welche vermutlich dem Seil oder den Seilen und dem Ausrüstungsgegenstand zuzuordnen sind, identifiziert werden.

Die Segmentierung bzw. Aufteilung oder Kategorisierung, insbesondere die Grobsegmentierung, der Messpunkte erfolgt vorzugsweise, um geometrische Primitive aus den Messpunkten zu extrahieren, die das Seil oder die Seile und markante Teile der Last darstellen. Vorzugsweise wird ein minimal umgebendes Rechteck bzw. eine "Bounding Box" verwendet, um die, insbesondere initiale, Position der Last zu schätzen.

Die Segmentierung bzw. Aufteilung oder Kategorisierung der Messpunkte erfolgt vorzugsweise durch eine Feinsegmentierung der Messpunkte, welche dem Seil oder den Seilen zuzuordnen sind. In den Messpunkten der Grobsegmentierung wird dabei vorzugsweise nach Messpunkten gesucht, welche einem Seilmodell bzw. Linienmodell entsprechen. Die Feinsegmentierung kann beispielsweise mittels eines "Random Sample and Consensus" (RANSAC)-Algorithmus und/oder Seilmodellen durchgeführt werden.

Die Segmentierung bzw. Aufteilung oder Kategorisierung der Messpunkte erfolgt vorzugsweise durch eine Feinsegmentierung der Messpunkte, welche dem Ausrüstungsgegenstand zuzuordnen sind.

Die Segmentierung, insbesondere die Grobsegmentierung und/oder die Feinsegmentierung, kann mittels eines Iterative-Closest-Point (ICP)-Algorithmus und/oder mittels eines Kalman-Filters erfolgen.

Vorzugsweise ist vorgesehen, dass bei dem Zuordnen eine Grobsegmentierung der Messpunkte erfolgt, wobei die Messpunkte als Messpunkte, die vermutlich dem Seil zuzuordnen sind und/oder als Messpunkte, die vermutlich der an dem Seil angeordneten Last zuzuordnen sind, identifiziert werden.

Vorzugsweise ist vorgesehen, dass bei dem Zuordnen eine Feinsegmentierung der Messpunkte erfolgt, wobei Messpunkte als Messpunkte, die dem Seil zuzuordnen sind und/oder als Messpunkte, die der an dem Seil befestigen Last zuzuordnen sind, identifiziert werden.

Vorzugsweise ist vorgesehen, dass die Feinsegmentierung unter Verwendung eines RANSAC-Algorithmus und/oder eines Seilmodells erfolgt.

Vorzugsweise ist vorgesehen, dass die Position des Seils einen Winkel des Seils umfasst oder ein Winkel des Seils ist und/oder dass die Position der an dem Seil befestigten Last eine Orientierung der an dem Seil befestigten Last umfasst oder eine Orientierung der an dem Seil befestigten Last ist.

Vorzugsweise erfolgt ein Ermitteln bzw. Bestimmen eines oder mehrerer Seilwinkel relativ zu der Sensoreinheit.

Vorzugsweise ist vorgesehen, dass das Ermitteln der Position und/oder Bewegung des Seils und/oder der an dem Seil befestigen Last relativ zu der Position der Sensoreinheit erfolgt.

Vorzugsweise ist vorgesehen, dass die ermittelte Position des Seils und/oder der an dem Seil befestigen Last einer oder mehrerer Koordinatentransformationen unterzogen wird.

Der ermittelte Seilwinkel und/oder die ermittelten Seilwinkel und/oder die Position und/oder Orientierung des Ausrüstungsgegenstands können in andere Koordinaten transformiert werden. So ist es z.B. denkbar, unter Berücksichtigung der Maschinenkinematik, die Messgrößen, insbesondere Messpunkte, in ein anderes körperfestes Koordinatensystem der Maschine zu übertragen.

Es ist auch denkbar, unter Berücksichtigung der Orientierung der Sensoreinheit relativ zur Erdbeschleunigung bzw. zum Lot, die Messgrößen, insbesondere Messpunkte, in ein raumfestes Koordinatensystem zu übertragen. Diese Transformation wird beispielsweise benötigt, um einen Schrägzug des Seils relativ zum Lot zu ermitteln.

Vorzugsweise ist vorgesehen, dass die Last ein seilgeführter Ausrüstungsgegenstand, insbesondere ein Schlitzwandgreifer oder eine Schlitzwandfräse, ist. Der Ausrüstungsgegenstand kann ein Schürfkübel sein.

Vorzugsweise ist vorgesehen, dass das Ermitteln der Position und/oder Bewegung der an dem Seil befestigen Last nur unter Verwendung von dem Seil zugeordneten Messpunkten erfolgt, insbesondere wobei sich die Last und/oder ein Teil des Seils nicht oder nicht vollständig in einem Erfassungsbereich der Sensoreinheit befindet.

Vorzugsweise ist vorgesehen, dass mittels der Sensoreinheit weitere Informationen, insbesondere über eine Umgebung, insbesondere der Maschine, ermittelt werden.

Die Erfindung betrifft auch ein System mit Mitteln zur Ausführung eines erfindungsgemäßen Verfahrens, wobei die Mittel eine Sensoreinheit umfassen.

Die Erfindung betrifft auch eine Maschine mit einem erfindungsgemäßen System.

Die Maschine ist vorzugsweise ein Raupenkran, ein Seilbagger, ein Turmdrehkran, ein Schiffskran, ein Hafenkran, ein Hafenmobilkran, ein Offshorekran, ein Schnelleinsatzkran oder ein Automobilkran. Das System kann Bestandteil einer oder mehrerer dieser Maschinen sein. Die Maschine kann ein Kran sein.

Das Verfahren dient vorzugsweise zur Bestimmung der Position und/oder Bewegung eines seilgeführten Ausrüstungsgegenstands. Die Last ist vorzugsweise ein Ausrüstungsgegentand, bspw. ein Schlitzwandgreifer oder eine Schlitzwandfräse. Vorzugsweise erfolgt eine Bestimmung der Position und/oder Orientierung des Ausrüstungsgegenstands relativ zu der Sensoreinheit.

Das Verfahren kann bei einem automatisierten Materialumschlag, insbesondere eines Hafenkrans, verwendet werden. Das System kann Bestandteil eines Warn- und/oder Hinweissystems, insbesondere eines Distance-Alerting-Systems, insbesondere für einen Hafenkran sein.

Vorzugsweise erfolgt eine Darstellung der Position und/oder Bewegung des Seils und/oder der an dem Seil angeordneten Last auf einer Anzeige. Vorzugsweise können einem Bediener an einem Remote-Steuerstand der Maschine, insbesondere eines Krans, bspw. eine Turmdrehkrans, Informationen zur Position der an dem Seil angeordneten Last, insbesondere eines Hakens, über Grund auf einem Live-Bild eingeblendet werden.

Die Position, Geschwindigkeit und/oder Orientierung der Last beim dynamischen Bewegen der Last, z.B. bei einem Materialumschlag sind vorzugsweise wichtige Kenngrößen für die Automatisierung der Bewegung des Krans bzw. der Last. Diese Kenngrößen sind bspw. erforderlich, um z.B. die Bewegung des Krans und/oder der Last zu steuern und/oder zu regeln, wenn eine Last an einen bestimmten Ort bewegt werden soll.

Vorzugsweise dient das Verfahren zur Überwachung von Schrägzügen. Dabei erfolgt vorzugsweise eine Überwachung einer Abweichung von einer Sollposition des Seils und/oder der an dem Seil angeordneten Last. Beispielsweise ist beim Betrieb eines Schlitzwandgreifers bzw. einer Schlitzwandfräse erforderlich, dass der erstellte Schlitz möglichst exakt einen vertikalen Verlauf aufweist. Wird ein Schrägzug gemessen bedeutet dies, dass der Schlitzwandgreifer bzw. die Schlitzwandfräse vom vertikalen Verlauf abweicht und/oder dass der Schlitzwandgreifer bzw. die Schlitzwandfräse selbst nicht im Lot sind und somit in Folge der erzeugte Schlitz von einem vertikalen Verlauf abweichen wird.

Der Vorteil des Ermittelns des Seilwinkels oder der Seilwinkel, gegenüber des reinen Ermittelns der Position des Ausrüstungsgegenstands, liegt darin, dass auch bei verdecktem Sichtfeld der Sensoreinheit eine Schätzung der Position des Ausrüstungsgegenstands möglich ist. Ein verdecktes Sichtfeld kann z.B. dadurch zustande kommen, dass der Ausrüstungsgegenstand in ein Loch, z.B. eine Schlitzwand oder einen Schiffsrumpf abgelassen wird oder sich der Ausrüstungsgegenstand unter Wasser befindet, wie z.B. bei einem Schürfkübel. Der Ausrüstungsgegenstand befindet sich dann bspw. nicht mehr im Erfassungsbereich der Sensoreinheit.

Im Gegensatz zu den aus dem Stand der Technik bekannten Systemen, wie bspw. dem VLF- oder dem LPO-System zur Messung eines Seilwinkels, ist der Montageaufwand für die Sensoreinheit bei dem erfindungsgemäßen Verfahren bzw. System geringer.

Insbesondere bei einem Raupenkran ist der Montageaufwand des VLF-Systems ungünstig, da für diese Systeme die aus dem Stand der Technik bekannte Sensorik am Seil befestigt wird und somit einen erhöhten Installationsaufwand auf der Baustelle erfordert.

Vorzugsweise ist der Vorteil der erfindungsgemäßen Technologie gegenüber dem VLF- und/oder LPO-System oder ähnlichen Systemen dadurch gegeben, dass dieselbe Sensoreinheit über die Erkennung des Schrägzugs hinaus weitere Informationen liefern kann. So können z.B. Information bezüglich der Umgebung der Maschine, wie bspw. über Hindernisse etc. ermittelt werden. Vorzugsweise kann damit dieselbe Sensoreinheit vielfach eingesetzt werden. Das System ist vorzugsweise ein in sich geschlossenes Messsystem und weist keine Abhängigkeiten von anderen Systemen auf. Die Messgrößen, insbesondere in Form von Messpunkten, können vorzugsweise auf das in sich geschlossenes System zurückgeführt werden. Vorzugsweise entfällt damit der Aufwand unterschiedliche Systeme untereinander in Relation zu setzen und/oder zu kalibrieren.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1 bis 4:: jeweils eine skizzierte Vorderansicht und eine skizzierte Seitenansicht einer Maschine mit einer Ausführungsform eines erfindungsgemäßen Systems.
- Fig. 5 und 6:: jeweils eine skizzierte Vorderansicht und eine skizzierte Seitenansicht einer Maschine.

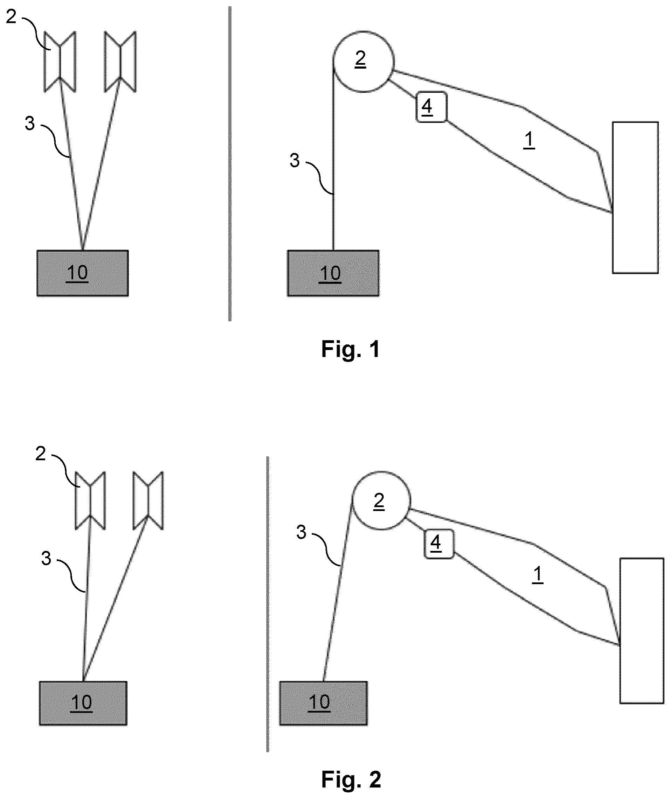

Die jeweils in den Figuren 1 bis 4 dargestellte Maschine in Form eines Krans weist einen Ausleger 1, zwei Seilrollen 2 und ein Seil 3, welches auch mehrere Seile umfassen kann oder aus mehreren Seilen bestehen kann, auf.

An dem Ausleger 1 der Maschine ist eine Sensoreinheit 4 in Form eines Lidars angeordnet. Die Sensoreinheit 4 weist einen Erfassungsbereich auf und ist derart angeordnet, dass sich das Seil 3 und die Last 10 in dem Erfassungsbereich befinden, sofern eine Verdeckung des Seils 3 oder der Last 10 erfolgt.

An dem Seil 3 ist eine Last 10 in Form eines seilgeführten Ausrüstungsgegenstands angeordnet.

In Fig. 1 ist eine Nominalposition der Last 10 dargestellt. Die an dem Seil 3 angeordnete Last 10 in Form eines seilgeführten Ausrüstungsgegenstands befindet sich im Lot unterhalb der Seilabgangspunkte auf den Seilrollen 2.

Die Sensoreinheit 4 ist am Ausleger befestigt damit die Sensoreinheit 4 von oben den seilgeführten Ausrüstungsgegenstand möglichst immer im Sichtfeld hat, d.h. keine Verdeckungen auftreten. Die Last 10 bzw. der seilgeführte Ausrüstungsgegenstand befindet sich vorzugsweise damit im Erfassungsbereich der Sensoreinheit 4.

In Fig. 2 ist die Last 10 in Form des seilgeführten Ausrüstungsgegenstands ausgelenkt, d.h. nicht in der Nominalposition. Eine Auslenkung kann in Richtung des Auslegers 1 und/oder seitlich erfolgen. Gründe für die Auslenkung können mechanischen Ursprungs (z.B. Bodenkontakt, seitliche Kräfte oder Auflager) oder dynamischen Ursprungs (z.B. Rotationsbewegung der Maschine) sein. Durch das Verfahren kann die Auslenkung ermittelt werden. In Fig. 2 weist das Seil 3 somit einen Schrägzug auf.

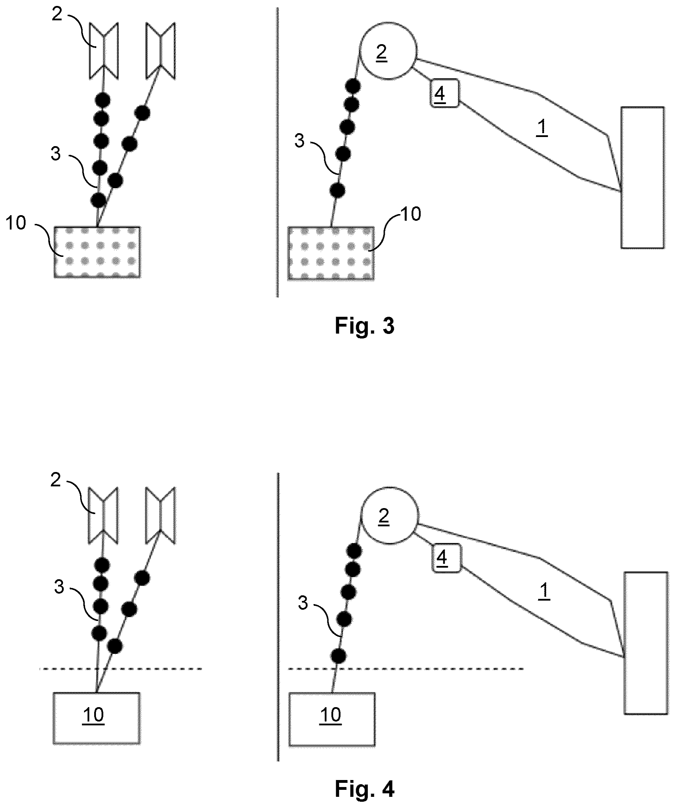

In den Fig. 3 und 4 ist das Messprinzip des Verfahrens illustriert. Das Seil 3 in den Fig. 3 und 4 weist ebenfalls einen Schrägzug auf.

Die Sensoreinheit 4 misst in bestimmten definierten Richtungen Abstände. Die gemessenen Abstände und zugehörigen Richtungen ergeben eine dreidimensionale Punktewolke aus Messpunkten, wobei die schwarzen Punkte in den Fig. 3 und 4 Messpunkte des Seils 3 und die helleren Punkte in den Fig. 3 und 4 Messpunkte der Last 10 bzw. des Ausrüstungsgegenstands sind.

Werden keine Messpunkte auf dem seilgeführten Ausrüstungsgegenstand erfasst, wie dies z.B. auf Grund von Verdeckung und/oder ein Eintauchen der Last 10 in Wasser geschehen kann, wobei die Last 10 bzw. der Ausrüstungsgegentand mindestens teilweise nicht im Erfassungsbereich der Sensoreinheit 4 angeordnet ist, und wie dies in Fig. 4 illustriert ist, können die Messpunkte des Seils 3 unter Verwendung eines Seilmodells unter Berücksichtigung der ausgegeben Seillänge verwendet werden, um die Position der Last 10 in Form des seilgeführten Ausrüstungsgegenstands zu ermitteln und/oder zu schätzen.

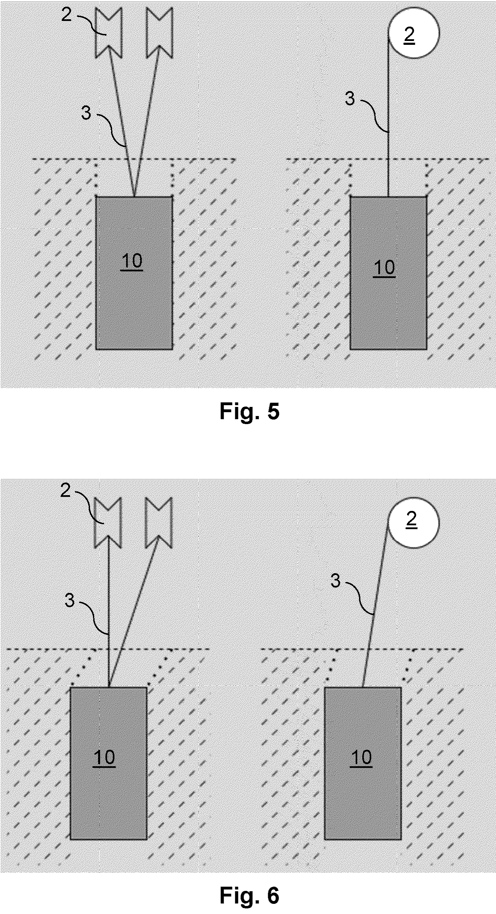

In den Fig. 5 und 6 ist eine Last 10 in Form eines Schlitzwandgreifers bzw. einer Schlitzwandfräse, die an einem Seil 3, welches über Seilrollen 2 geführt ist, dargestellt.

In Fig. 5 befindet sich die Last 10 lotrecht unter den Seilrollen 2 und das Seil 3 ist lotrecht, d.h. ohne horizontalen Versatz zur Vertikalen, ausgerichtet. Die Last 10 befindet sich also in einer Nominalposition.

In Fig. 6 weist das Seil 3 einen Schrägzug auf.

Der Schlitzwandgreifer bzw. die Schlitzwandfräse weist somit nach einigen Metern im Untergrund, der in den Fig. 5 und 6 durch die gestrichelt schraffierten Flächen dargestellt ist, einen seitlichen Versatz auf, wie dies aus Fig. 6 hervorgeht.

Durch das Ermitteln der Seilwinkel kann dieser Versatz erkannt werden. Die Erkennung des Schrägzugs bzw. Versatzes kann z.B. verwendet werden, um einen Bediener auf den Versatz hinzuweisen und/oder um eine dezidierte Messfahrt zur Feststellung des Versatzes über einen oder mehrere Inertialgeber, die z.B. an oder in dem Schlitzwandgreifer bzw. der Schlitzwandfräse angeordnet sein können, durchzuführen.

Die aktuelle Messtechnik über Inertialgeber des Schlitzwandgreifers bzw. der Schlitzwandfräse kann Schrägstellungen des Schlitzwandgreifers bzw. der Schlitzwandfräse gut erkennen. Diese Messtechnik ist aber darauf angewiesen dezidierte Messfahren durchzuführen, um einen horizontalen Versatz festzustellen. Das erfindungsgemäße Verfahren kann dafür verwendet werden, den horizontalen Versatz zu überwachen.

## Patentansprüche

1. Verfahren zur Ermittlung einer Position und/oder Bewegung eines Seils, insbesondere einer Maschine, und/oder einer an dem Seil angeordneten Last, **gekennzeichnet durch** die Schritte:
- Ermitteln von Messpunkten durch eine Sensoreinheit;
- Zuordnen der Messpunkte zu dem Seil und/oder zu der an dem Seil angeordneten Last;
- Ermitteln der Position und/oder Bewegung des Seils und/oder der an dem Seil befestigen Last.

2. Verfahren nach Anspruch 1, **dadurch gekennzeichnet, dass** die Sensoreinheit ein Lidar ist oder einen Lidar aufweist und/oder insbesondere an der Maschine angeordnet ist.

3. Verfahren nach einem der vorhergehenden Ansprüche, **dadurch gekennzeichnet, dass** bei dem Zuordnen eine Grobsegmentierung der Messpunkte erfolgt, wobei die Messpunkte als Messpunkte, die vermutlich dem Seil zuzuordnen sind und/oder als Messpunkte, die vermutlich der an dem Seil angeordneten Last zuzuordnen sind, identifiziert werden.

4. Verfahren nach einem der vorhergehenden Ansprüche, **dadurch gekennzeichnet, dass** bei dem Zuordnen eine Feinsegmentierung der Messpunkte erfolgt, wobei Messpunkte als Messpunkte, die dem Seil zuzuordnen sind und/oder als Messpunkte, die der an dem Seil befestigen Last zuzuordnen sind, identifiziert werden.

5. Verfahren nach Anspruch 4, **dadurch gekennzeichnet, dass** die Feinsegmentierung unter Verwendung eines RANSAC-Algorithmus und/oder eines Seilmodells erfolgt.

6. Verfahren nach einem der vorhergehenden Ansprüche, **dadurch gekennzeichnet, dass** die Position des Seils einen Winkel des Seils umfasst oder ein Winkel des Seils ist und/oder dass die Position der an dem Seil befestigten Last eine Orientierung der an dem Seil befestigten Last umfasst oder eine Orientierung der an dem Seil befestigten Last ist.

7. Verfahren nach einem der vorhergehenden Ansprüche, **dadurch gekennzeichnet, dass** das Ermitteln der Position und/oder Bewegung des Seils und/oder der an dem Seil befestigen Last relativ zu der Position der Sensoreinheit erfolgt.

8. Verfahren nach einem der vorhergehenden Ansprüche, **dadurch gekennzeichnet, dass** die ermittelte Position des Seils und/oder der an dem Seil befestigen Last einer oder mehrerer Koordinatentransformationen unterzogen wird.

9. Verfahren nach einem der vorhergehenden Ansprüche, **dadurch gekennzeichnet, dass** die Last ein seilgeführter Ausrüstungsgegenstand, insbesondere ein Schlitzwandgreifer oder eine Schlitzwandfräse, ist.

10. Verfahren nach einem der vorhergehenden Ansprüche, **dadurch gekennzeichnet, dass** das Ermitteln der Position und/oder Bewegung der an dem Seil befestigen Last nur unter Verwendung von dem Seil zugeordneten Messpunkten erfolgt, insbesondere wobei sich die Last und/oder ein Teil des Seils nicht oder nicht vollständig in einem Erfassungsbereich der Sensoreinheit befindet.

11. Verfahren nach einem der vorhergehenden Ansprüche, **dadurch gekennzeichnet, dass** mittels der Sensoreinheit weitere Informationen, insbesondere über eine Umgebung, insbesondere der Maschine, ermittelt werden.

12. System mit Mitteln zur Ausführung eines Verfahrens nach einem der vorhergehenden Ansprüche, wobei die Mittel eine Sensoreinheit umfassen.

13. Maschine mit einem System nach Anspruch 12.
